# EUROPÄISCHE PATENTSCHRIFT

(11) **EP 3 172 117 B1**
(45) Veröffentlichungstag und Bekanntmachung des Hinweises auf die Patenterteilung: **26.09.2018**
(21) Anmeldenummer: 15734573.7
(22) Anmeldetag: 01.07.2015
(51) Int. Cl.: B62D 15/00, B60W 30/16, B62D 15/02

(54) **VERFAHREN ZUM BETRIEB EINES FAHRERASSISTENZSYSTEMS ZUR UNTERSTÜTZUNG EINES PARKVORGANGS SOWIE ZUGEORDNETES KRAFTFAHRZEUG**
METHOD OF OPERATING A DRIVER ASSISTANT FOR AIDING A PARKING PROCESS AND ASSOCIATED VEHICLE
PROCÉDÉ POUR OPÉRER UNE ASSISTANCE DE CONDUITE POUR AIDE DANS UN PROCESSUS DE GARAGE ET LE VÉHICULE ASSOCIÉ

(30) Priorität: 26.07.2014 DE 102014011108
(43) Veröffentlichungstag der Anmeldung: 31.05.2017
(73) Patentinhaber: Audi AG, 85045 Ingolstadt (DE)
(72) Erfinder: ALTINGER, Harald, 85049 Gerolfing (DE); SCHULLER, Florian, 85737 Ismaning (DE)
(74) Vertreter: Herbst, Matthias Heinz
(86) Internationale Anmeldenummer: PCT/EP2015/001327
(87) Internationale Veröffentlichungsnummer: WO 2016/015807

(56) Entgegenhaltungen:
- EP-A1- 2 100 778
- DE-A1-102010 042 314

## Beschreibung

Die Erfindung betrifft ein Verfahren zum Betrieb eines Fahrerassistenzsystems zur Unterstützung eines Parkvorgangs eines Kraftfahrzeugs.

Es sind eine Vielzahl von Fahrerassistenzsystemen bekannt, die einen Fahrer beim Einparken eines Kraftfahrzeugs in eine Parklücke unterstützen. Einfache Systeme stellen dem Fahrer Zusatzinformationen bereit, indem sie Teile des Kraftfahrzeugumfelds durch Sensoren erfassen und dem Fahrer diese Sensorinformationen bereitstellen. Alternativ oder ergänzend ist es auch möglich, dass ein Fahrerassistenzsystem die durch die Sensoren bereitgestellten Informationen auswertet und den Fahrer direkt durch Hinweise, beispielsweise durch eine Sprachausgabe, oder durch Fahreingriffe unterstützt.

Auch Fahrerassistenzsysteme, die ein vollautomatisches Einparken in eine Parklücke auf Basis von durch Sensoren des Kraftfahrzeugs erfasste Sensorinformationen durchführen können, sind bekannt. Nachteilig an Assistenzsystemen zur Unterstützung eines Parkvorgangs, die auf Basis von Sensorinformationen arbeiten ist es, dass ein Erfassen einer Parklücke nur anhand von sensorisch erfassbaren Merkmalen möglich ist. Die sensorische Wahrnehmung und Vermessung von beparkbaren Flächen weist jedoch aufgrund der Eigenschaften der verwendeten Sensoren häufig ein hohes Maß an Unsicherheit auf. Insbesondere, wenn bestimmte leicht durch Sensoren zu erkennende Merkmale, wie Nachbarfahrzeuge oder klar erkennbare Parkmarkierungen fehlen, ist eine Detektion einer Zielparklücke häufig nicht möglich.

Aufgrund der genannten Schwächen von sensorbasierten Fahrerassistenzsystemen zur Unterstützung eines Parkvorgangs ist mit diesen insbesondere eine automatisierte Parkfunktion, bei der ein Kraftfahrzeug selbständig eine freie Parklücke in einem Parkbereich, beispielsweise einem Parkhaus, erkennt, diese anfährt und dort einparkt, nicht zuverlässig umsetzbar.

Aus DE 10 2010 042 314 A1 ist ein Verfahren zum Betrieb eines Fahrerassistenzsystems zur Unterstützung eines Einparkvorgangs des Fahrzeugs bekannt, bei dem durch eine Positionsbestimmungseinrichtung die Ist-Fahrzeugposition ermittelt wird. Sodann wird ein bestimmter Parkbereich ermittelt, in dem das Kraftfahrzeug geparkt werden soll, sowie eine zumindest die Parkbereichsposition des bestimmten Parkbereichs beschreibende Parkbereichsinformation aus vorgegebenen Kerndaten in Abhängigkeit der Ist-Fahrzeugposition durch eine Recheneinrichtung des Kraftfahrzeugs ermittelt. Sodann wird wenigstens eine den bestimmten Parkbereich betreffende Sensorinformation durch Erfassung des Umfelds der Parkbereichposition durch wenigstens einen Sensor des Kraftfahrzeugs ermittelt. Schließlich wird eine Fahrerinformation ausgegeben oder wenigstens ein Fahreingriff durch das Fahrerassistenzsystem vorgenommen, jeweils in Abhängigkeit sowohl der Parkbereichsinformation als auch der Sensorinformation.

Aus EP 2 100 778 A1 ist ein Parkassistenzsystem eines Kraftfahrzeugs bekannt, welches System ein Bild einer Markierung aufnimmt und durch eine Bildverarbeitungseinheit charakteristische Eigenschaften des Bildes extrahiert werden. Eine Berechnungseinheit berechnet anschließend eine Führung des Fahrzeugs von der aktuellen Position zu einem freien Parkplatz. Zur Bildaufnahme werden bevorzugt mehrere Kameras verwendet, die jeweils Bilder der Markierung aufnehmen.

Der Erfindung liegt somit die Aufgabe zugrunde, ein Verfahren zur Unterstützung eines Parkvorgangs eines Kraftfahrzeugs anzugeben, das den Einparkvorgang erleichtert.

Die Aufgabe wird erfindungsgemäß durch ein Verfahren der eingangs genannten Art gelöst, das die folgenden Schritte umfasst:
- Ermitteln einer Ist-Fahrzeugposition durch eine Positionsbestimmungseinrichtung des Kraftfahrzeugs,
- Ermitteln eines bestimmten Parkbereichs, in dem das Kraftfahrzeug geparkt werden soll, sowie einer zumindest die Parkbereichsposition des bestimmten Parkbereichs beschreibenden Parkbereichsinformation aus vorgegebenen Kartendaten in Abhängigkeit der Ist-Fahrzeugposition durch eine Recheneinrichtung des Kraftfahrzeugs,
- Ermittlung wenigstens einer den bestimmten Parkbereich betreffenden Sensorinformation durch Erfassen des Umfeldes der Parkbereichsposition durch wenigstens einen Sensor des Kraftfahrzeugs, wobei in Abhängigkeit der Parkbereichsinformation der zur Ermittlung der Sensorinformation genutzte Sensor aus einer Mehrzahl von Sensoren des Kraftfahrzeugs ausgewählt wird und/oder wenigstens ein die Erfassung von Sensordaten durch den Sensor parametrisierender Erfassungsparameter und/oder ein die Ermittlung der Sensorinformationen aus den Sensordaten parametrisierender Verarbeitungsparameter angepasst wird,
- Ausgabe einer Fahrerinformation und/oder Durchführen wenigstens eines Fahreingriffs durch das Fahrerassistenzsystem, jeweils in Abhängigkeit sowohl der Parkbereichsinformation als auch der Sensorinformation.

Erfindungsgemäß wird vorgeschlagen, zusätzlich zu Sensorinformationen im Rahmen des Parkvorgangs eine Parkbereichsinformation zu nutzen, die aus vorgegebenen Kartendaten gewonnen ist. Es werden also Daten zweier verschiedener Quellen, nämlich die Daten einer vorgegebenen Karte sowie die Daten von Sensoren fusioniert. Da eine Parkbereichposition bereits als Parkbereichsinformation aus den vorgegebenen Kartendaten ermittelt wurde, ist es im erfindungsgemäßen Verfahren möglich, gezielt das Umfeld der Parkbereichsinformation durch Sensoren zu erfassen.

Als Fahrerinformation können grafische oder akustische Hinweise für einen durchzuführenden Fahreingriff an den Fahrer ausgegeben werden. Besonders vorteilhaft kann das erfindungsgemäße Verfahren für ein Fahrerassistenzsystem genutzt werden, das direkt Fahreingriffe durchführen kann. In diesem Fall kann das Kraftfahrzeug voll- oder teilautomatisiert in den Parkbereich geführt werden.

Die Erfassung der Sensorinformation dient vor allem dazu, die vorgegebenen Kartendaten durch aktuelle den Parkbereich betreffende Informationen zu ergänzen und/oder um Daten mit einer höheren Ortsauflösung bereitzustellen, als sie die Kartendaten für sich genommen bereitstellen würden. Aufgrund der Parkbereichsinformation und der Sensorinformation kann eine endgültige Parkposition für das Kraftfahrzeug in dem Parkbereich bestimmt werden und es kann insbesondere eine Trajektorie zu dieser Parkposition geplant werden. Die Erfassung der Sensorinformation dient zusätzlich dazu, zu erkennen, wenn ein bestimmter Parkbereich nicht durch das Kraftfahrzeug befahrbar ist, beispielsweise wenn sich in diesem Parkbereich bereits ein weiteres Kraftfahrzeug oder ein Hindernis befindet. In diesem Fall kann der bestimmte Parkbereich verworfen werden und das Verfahren kann wiederholt werden, wobei während der Ermittlung des bestimmten Parkbereichs zusätzlich die Bedingung gestellt wird, dass ein anderer Parkbereich ermittelt wird.

Im erfindungsgemäßen Verfahren können aufgrund der Fusion der Sensorinformation und der aus vorgegebenen Kartendaten gewonnene Parkbereichsinformation robuste Informationen über die Position und insbesondere über die Abmessungen eines Bereichs gewonnen werden, in dem das Kraftfahrzeug parkbar ist. Somit kann zuverlässig ein bestimmter Parkbereich ermittelt werden, das heißt beispielsweise eine Zielparklücke ausgewählt werden, und es kann eine Zielpose, also eine endgültige Position des Kraftfahrzeugs in dem Parkbereich bestimmt werden. Da sowohl Kartendaten als auch Sensordaten genutzt werden, ist dies weitgehend unabhängig von dem konkreten Umfeld des bestimmten Parkbereichs, insbesondere unabhängig vom Vorhandensein von Parkmarkierungen und von der Stellung von zum Parkbereich benachbarten Fahrzeugen, möglich.

Das Kraftfahrzeug kann durch das Fahrerassistenzsystem zumindest teilweise automatisch längs- und/oder quergeführt entlang einer durch die Recheneinrichtung berechneten Trajektorie zu dem bestimmten Parkbereich geführt werden, wobei die Trajektorie in Abhängigkeit sowohl eines Erfassungsbereichs des Sensors als auch der Parkbereichsinformation ermittelt wird. Da im erfindungsgemäßen Verfahren eine Parkbereichsposition und insbesondere auch eine geometrische Abmessung eines Parkbereichs bekannt ist, kann eine Trajektorie, auf der das Kraftfahrzeug zum Parkbereich geführt wird, derart geplant werden, dass der Parkbereich optimal durch den wenigstens einen Sensor erfasst wird. Beispielsweise können Ultraschallsensoren, Laserscanner, Kameras oder ähnliches nur Teile des Raumwinkels des Kraftfahrzeugumfelds erfassen. Ist der Parkbereich seitlich durch für den Sensor nicht durchsichtige Objekte, beispielsweise durch weitere Fahrzeuge, begrenzt, so ist ein vollständiges Einsehen des Parkbereichs durch die Sensoren häufig nur von bestimmten Positionen aus möglich. In dem erfindungsgemäßen Verfahren ist es jedoch möglich, die Trajektorie derart zu berechnen, dass der Parkbereich vollständig oder zumindest weitgehend von dem Sensor erfasst werden kann.

Es ist möglich, dass durch die Kartendaten mehrere potentiell befahrbare Parkbereiche definiert werden, aus denen der bestimmte Parkbereich ausgewählt wird. Beispielsweise können bestimmte Bereiche der Karte als befahrbar und zum Parken geeignet gekennzeichnet sein. Vorteilhaft ist den Kartendaten auch die räumliche Abmessung der potentiell befahrbaren Parkbereiche zu entnehmen.

Insbesondere können vor der Ermittlung des bestimmten Parkbereichs durch den oder wenigstens einen weiteren Sensor des Kraftfahrzeugs zu wenigsten einem der potentiell befahrbaren Parkbereiche Umfeldinformationen erfasst werden, wonach der bestimmte Parkbereich zusätzlich in Abhängigkeit der Umfeldinformationen ausgewählt wird. Eine Umfeldinformation kann insbesondere daraufhin ausgewertet werden, ob der Parkbereich voraussichtlich frei, das heißt tatsächlich durch das Kraftfahrzeug befahrbar, oder belegt, das heißt durch ein weiteres Kraftfahrzeug oder ein anderes Objekt blockiert, ist. Beispielsweise kann bereits aus einer relativ großen Entfernung und/oder in einem relativ flachen Winkel zu einem Parkbereich durch eine Kamera des Kraftfahrzeugs erkannt werden, wenn ein Parkbereich durch ein weiteres Fahrzeug blockiert ist.

Insbesondere kann das Kraftfahrzeug vor der Ermittlung des bestimmten Parkbereichs durch das Fahrerassistenzsystem zumindest teilweise automatisch längs- und/oder quergeführt entlang einer durch die Recheneinrichtung berechneten Umfelderfassungstrajektorie zu wenigstens einer in Abhängigkeit der Kartendaten ermittelten Umfelderfassungsposition geführt werden, wobei an der Umfelderfassungsposition die Umfeldinformationen erfasst werden. Beispielsweise kann die Umfelderfassungstrajektorie derart geplant werden, dass für mehrere der potentiell befahrbaren Parkbereiche vorläufige Sensorinformationen ermittelt werden, die eine Prognose erlauben, mit welcher Wahrscheinlichkeit ein potentiell befahrbarer Fahrbereich tatsächlich befahrbar ist. Ein Kraftfahrzeug kann beispielsweise entlang eines Parkstreifens geführt werden und bereits aus relativ großer Entfernung voraussichtlich freie Parkbuchten erkennen und eine dieser Parkbuchten als bestimmten Parkbereich wählen.

Vorteilhaft werden die potentiell befahrbaren Parkbereiche durch die Kartendaten als separate Parkbereiche, in denen jeweils genau ein Kraftfahrzeug parkbar ist, definiert. Die potentiell befahrbaren Parkbereiche können beispielsweise Parkbuchten oder einzelne Parkplätze sein. Für jeden der potentiell befahrbaren Parkbereiche kann, insbesondere durch die Kartendaten, zusätzlich eine Belegungsinformation vorgegeben werden, durch die angegeben wird, ob der potentiell befahrbare Parkbereich frei oder belegt ist, wobei als der bestimmte Parkbereich einer der als frei markierten potentiell befahrbaren Parkbereiche ausgewählt wird. Ein als frei markierter potentiell befahrbarer Parkbereich kann ein Parkbereich sein, der voraussichtlich tatsächlich befahrbar ist. Ein als belegt markierter potentiell befahrbarer Parkbereich kann ein voraussichtlich nicht tatsächlich befahrbarer Parkbereich sein, der beispielsweise durch ein weiteres Kraftfahrzeug belegt oder gesperrt ist.

Die Belegungsinformation kann vor der Ermittlung eines bestimmten Parkbereichs durch das Fahrerassistenzsystem des Kraftfahrzeugs, insbesondere von einer Infrastruktureinrichtung, drahtlos empfangen werden. Alternativ oder ergänzend können die Kartendaten vor der Ermittlung eines bestimmten Parkbereichs durch das Fahrerassistenzsystem des Kraftfahrzeugs, insbesondere von einer Infrastruktureinrichtung, drahtlos empfangen werden. Ein drahtloser Empfang der Belegungsinformation und/oder der Kartendaten ist vorteilhaft, da in diesem Fall stets aktuelle Karten- beziehungsweise Belegungsdaten zur Verfügung stehen. So kann beispielsweise in einem Bereich, der für ein automatisiertes Parken eines Kraftfahrzeugs vorgesehen ist, eine Sensorikinfrastruktur vorgesehen sein, die ein Vorhandensein von Kraftfahrzeugen in potentiell befahrbaren Parkbereichen erkennt und diese Parkbereiche in einer internen Karte als belegt markiert. Wird diese Karte als Kartendaten an das Kraftfahrzeugs übertragen oder werden dem Kraftfahrzeug die entsprechenden Belegungsinformationen übertragen, können potentiell befahrbare Parkbereiche, die jedoch durch ein Kraftfahrzeug belegt sind, bereits von Beginn an nicht als Kandidaten zur Auswahl eines bestimmten Parkbereichs berücksichtigt werden. Das Kraftfahrzeug kann einen freien Parkbereich als den bestimmten Parkbereich wählen und diesen, insbesondere automatisiert, in Abhängigkeit des Erfassungsbereichs des Sensors und der Parkbereichsinformation anfahren. Hindernisse oder andere Gründe einen Parkbereich nicht zu nutzen, die der Infrastruktureinrichtung nicht bekannt sind, können durch das Kraftfahrzeug selbsttätig durch das Erfassen der Sensorinformation erkannt werden.

Es ist möglich, dass die Kartendaten durch ein Navigationssystem des Kraftfahrzeugs bereitgestellt werden. Die Kartendaten können fest im Navigationssystem gespeichert sein, es ist jedoch auch möglich, die Kartendaten, beispielsweise über das Internet oder über Car2X-Kommunikation regelmäßig oder bei bestimmten Anlässen zu aktualisieren. Werden Kartendaten eines Navigationssystems genutzt, so können diese typischerweise keine Informationen darüber geben, ob ein potentiell befahrbarer Parkbereich frei oder belegt ist. Daher ist es in diesem Fall besonders vorteilhaft, wie vorangehend beschrieben, vor Ermittlung des bestimmten Parkbereichs Umfeldinformationen zu erfassen und diese daraufhin auszuwerten, ob einzelne potentiell befahrbare Parkbereiche frei oder belegt sind.

Der zur Ermittlung der Sensorinformation genutzte Sensor wird in Abhängigkeit der Parkbereichsinformation aus einer Mehrzahl von Sensoren des Kraftfahrzeugs ausgewählt. In dem erfindungsgemäßen Verfahren ist die Ist-Fahrzeugposition sowie die Parkbereichsposition bekannt. Da als Sensorinformation das Umfeld der Parkbereichsposition erfasst werden soll, vorzugsweise der gesamte Bereich des Parkbereichs, ist bekannt, in welcher Lage und in welcher Entfernung sich der zu erfassende Bereich bezüglich des Kraftfahrzeugs befindet. Es ist daher möglich, nur den oder die Sensoren zur Erfassung der Sensorinformation zu nutzen, die den relevanten Erfassungsbereich optimal erfassen. Weitere Sensoren, die zur Erfassung des relevanten Bereichs nicht geeignet sind, können nicht ausgewertet werden und können somit die Sensorinformation nicht verfälschen. Es ist auch möglich, Sensoren, die nicht zur Ermittlung der Sensorinformation genutzt werden, zu deaktivieren und somit den Energieverbrauch des Kraftfahrzeugs zu senken. Beispielsweise kann zur Erfassung der Sensorinformation, wenn es sich um eine tiefe Parklücke handelt, ein Laserscanner des Kraftfahrzeugs genutzt werden, während für relativ flache Parklücken, beispielsweise in Parkstreifen, Ultraschallsensoren genutzt werden können.

In Abhängigkeit der Parkbereichsinformation wird wenigstens ein die Erfassung von Sensordaten durch den Sensor parametrisierender Erfassungsparameter und/oder ein die Ermittlung der Sensorinformationen aus den Sensordaten parametrisierender Verarbeitungsparameter angepasst. Beispielsweise ist es möglich Schwellwerte im Rahmen einer Bildverarbeitung, die Parameter einer Reflektionsunterdrückung für einen Ultraschallsensor, eine maximale Sensorreichweite oder ähnliches anzupassen. Insbesondere kann eine Parametrisierung eines Kalman-Filters, der im Rahmen der Datenauswertung genutzt wird, angepasst werden. Wird die Sensorinformation mit den Kartendaten fusioniert beziehungsweise die Karte mit der Sensorinformation angereichert, kann eine Gewichtung der Sensorinformation von der Parkbereichsinformation abhängen.

Als Sensor oder wenigstens einer der Sensoren kann ein Ultraschallsensor, ein Laserscanner, eine Kamera oder ein Radarsensor verwendet werden.

Neben dem Verfahren betrifft die Erfindung ein Kraftfahrzeug, das zur Durchführung des erfindungsgemäßen Verfahrens ausgebildet ist. Insbesondere umfasst das erfindungsgemäße Kraftfahrzeug eine Positionsbestimmungseinrichtung, eine Recheneinrichtung und wenigstens einen Sensor. Vorteilhaft ist das erfindungsgemäße Kraftfahrzeug zum automatisierten Fahren ausgebildet, wobei das Fahrerassistenzsystem längs- und/oder querführende Fahreingriffe durchführen kann.

Weitere Vorteile und Einzelheiten der Erfindung zeigen die folgenden Ausführungsbeispiele sowie die zugehörigen Zeichnungen. Dabei zeigen schematisch:
- Fig. 1: ein Ablaufdiagramm eines Ausführungsbeispiels des erfindungsgemäßen Verfahrens,
- Fig. 2: eine Verkehrssituation, in der ein Ausführungsbeispiel eines erfindungsgemäßen Kraftfahrzeugs das erfindungsgemäße Verfahren gemäß Fig. 1 durchführt, und
- Fig. 3: ein Ablaufdiagramm eines weiteren Ausführungsbeispiels des erfindungsgemäßen Verfahrens.

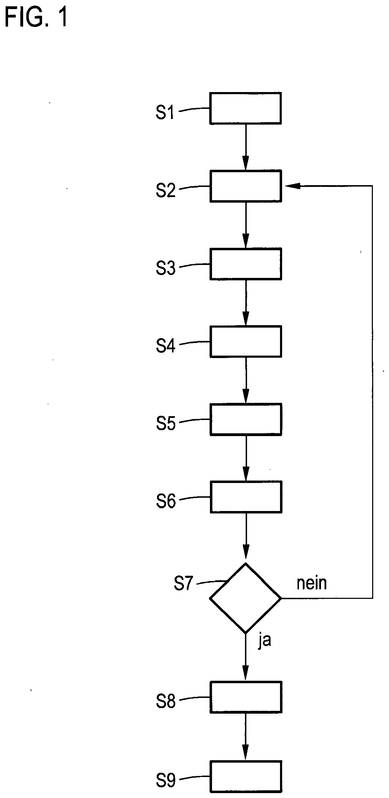

Fig. 1 zeigt schematisch ein Ablaufdiagramm eines Verfahrens zum Betrieb eines Fahrerassistenzsystems zur Unterstützung eines Parkvorgangs eines Kraftfahrzeugs.

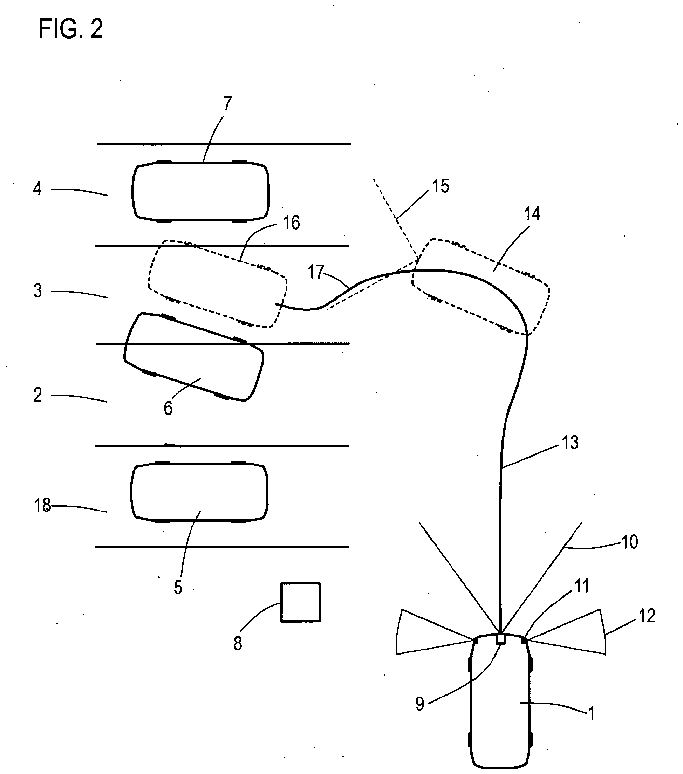

Fig. 2 zeigt eine Verkehrssituation, in der dieses Verfahren durch ein erfindungsgemäßes Kraftfahrzeug 1 angewandt wird. Zu Beginn des Verfahrens befindet sich das Kraftfahrzeug 1 in einem Bereich, in dem mehrere potentiell befahrbare Parkbereiche 2, 3, 4, 18, nämlich parallele Parkplätze, vorhanden sind. Das Kraftfahrzeug 1 wird automatisiert durch ein Fahrerassistenzsystem geführt und soll automatisiert, ohne ein Eingreifen des Fahrers, geparkt werden. Die potentiell befahrbaren Parkbereiche 2, 4 und 18 sind durch die dort geparkten weiteren Fahrzeuge 5, 6 und 7 belegt. Durch nicht gezeigte, in der Infrastruktur integrierte Sensoren wird die Belegung der potentiell befahrbaren Parkbereiche 2, 4 und 18 erfasst und in der Infrastruktureinrichtung 8 gespeichert.

In Schritt S1 wird durch die Infrastruktureinrichtung 8 eine Karte der Umgebung an das Kraftfahrzeug 1 übertragen, wobei diese Karte die mehreren potentiell befahrbaren Parkbereiche 2, 3, 4, 18 durch ihre jeweilige Position und ihre jeweiligen Abmessungen beschreibt. Ergänzend wird durch die übertragene Karte eine Belegungsinformation vorgegeben, die angibt, dass die potentiell befahrbaren Parkbereiche 2, 4 und 18 belegt sind und dass der potentiell befahrbare Parkbereich 3 frei ist. Eine Positionsbestimmungseinrichtung des Kraftfahrzeugs 1 ermittelt die Ist-Fahrzeugposition des Kraftfahrzeugs 1. Somit ist die Position des Kraftfahrzeugs 1 bezüglich der Karte und bezüglich der potentiell befahrbaren Parkbereiche 2, 3, 4, 18 bekannt.

In Schritt S2 wird durch eine nicht gezeigte Recheneinrichtung des Kraftfahrzeugs 1 der potentiell befahrbare Parkbereich 3 als der bestimmte Parkbereich 3 ermittelt, da gemäß der Belegungsinformation der potentiell befahrbare Parkbereich 3 der einzige freie Parkbereich 3 ist. Wären mehrere der Parkbereiche 2, 3, 4, 18 als frei markiert, könnte beispielsweise der am nächsten am Kraftfahrzeug 1 liegende freie Parkbereich als der bestimmte Parkbereich gewählt werden.

Sollte das Kraftfahrzeug 1 allein aufgrund der durch die Infrastruktureinrichtung 8 übertragenen Kartendaten in dem Parkbereich 3 geparkt werden, so würde nicht erkannt, dass das weitere Fahrzeug 6 in dem potentiell befahrbaren Parkbereich 3 hineinragt, weshalb ein gerades Parken des Kraftfahrzeugs 1 in den potentiellen befahrbaren Parkbereich nicht möglich ist. Ein Parken ausschließlich in Abhängigkeit der Kartendaten könnte somit zu einer Kollision des Kraftfahrzeugs 1 mit dem weiteren Fahrzeug 6 führen. Um dies zu vermeiden, wird zusätzlich eine Sensorinformation durch Erfassen des Umfeldes der Parkbereichsposition des Parkbereichs 3 bestimmt.

Das Kraftfahrzeug weist zwei seitlich angeordnete Ultraschallsensoren, die Sensoren 11, sowie einen frontal angeordneten Laserscanner, den Sensor 9, auf. An der momentanen Ist-Fahrzeugposition des Kraftfahrzeugs 1 ist der Parkbereich 3 durch die Ultraschallsensoren überhaupt nicht und durch den Laserscanner nur zu einem sehr kleinen Teil erfassbar.

Um eine Verbesserung der Erfassung der Sensorinformation zu erreichen, wird durch die Recheneinrichtung des Kraftfahrzeugs 1 zunächst eine Parkbereichsinformation für den bestimmten Parkbereich 3 bestimmt, die die Position des Parkbereichs 3 sowie die räumlichen Abmessungen des Parkbereichs 3 beschreibt. In Schritt S3 wird anschließend eine Trajektorie 13 bestimmt, um das Kraftfahrzeug 1 automatisch längs- und quergeführt in Richtung des Parkbereichs 3 zu führen, und zwar derart, dass der Parkbereich 3 möglichst gut durch die Sensoren 11, 9 erfassbar ist.

Aufgrund der Größe und Orientierung des Parkbereichs 3 ermittelt die Recheneinrichtung des Kraftfahrzeugs 1, dass die Erfassungsbereiche 12 der Sensoren 11, also der Ultraschallsensoren, ungeeignet sind, den Parkbereich 3, der eine tiefe Parklücke ist, zu erfassen. Entsprechend soll die Trajektorie 13 das Kraftfahrzeug 1 so führen, dass der Parkbereich 3 möglichst vollständig durch den Erfassungsbereich 10 des Sensors 9, also des Laserscanners, erfassbar ist. Entsprechend berechnet die Recheneinrichtung die Trajektorie 13, die das Kraftfahrzeug zur prognostizierten Fahrzeugposition 14 führt, so dass der prognostizierte Erfassungsbereich 15 den Parkbereich 3 im wesentlichen vollständig erfasst. In Schritt S5 wird das Kraftfahrzeug 1 durch eine automatische Längs- und Querführung ohne einen Eingriff eines Fahrers zur Position 14 geführt.

Dort erfasst der Laserscanner den Parkbereich 3 und die Recheneinrichtung ermittelt durch Verarbeitung der Sensordaten und des Laserscanners die Sensorinformation, die ein dreidimensionales Abbild des Parkbereichs 3 darstellt. Bei der Auswertung der Messdaten des Lagerscanners wird eine maximale Entfernung für reflektierende Objekte, also eine Sensorreichweite, in Abhängigkeit der Parkbereichsinformation vorgegeben. Aus diesem dreidimensionalen Abbild geht insbesondere hervor, dass das weitere Fahrzeug 6 in den Parkbereich 3 hineinragt.

In Schritt S6 wird eine endgültige Pose 16 im Parkbereich 3 bestimmt, die das Kraftfahrzeug 1 nach dem Parken einnehmen soll. Hierbei wird aus der Parkbereichsinformation ermittelt, innerhalb welches Bereiches sich das Kraftfahrzeug 1 aufhalten muss, so dass es nicht in einen Bereich hineinragt, in dem ein Parken nicht möglich beziehungsweise nicht erlaubt ist. Zugleich wird aus der Sensorinformation der tatsächlich befahrbare Bereich innerhalb des Parkbereichs ermittelt. Die Fusion der Sensorinformation und der Parkbereichsinformation ergibt, dass in der Pose 16 ein Parken im wesentlichen innerhalb des Parkbereichs 3 möglich ist. Entsprechend wird der Parkbereich 3 in Schritt S7 als tatsächlich befahrbarer Parkbereich erkannt und das Verfahren wird mit Schritt S8 fortgesetzt. Wäre dies nicht der Fall, so würde das Verfahren ab Schritt S2 wiederholt und es würde versucht werden, einen weiteren bestimmten Parkbereich zu wählen. Da in der in Fig. 2 gezeigten Verkehrssituation keine weiteren potentiell befahrbaren Parkbereiche, die nicht durch weitere Fahrzeuge 5, 6, 7 belegt sind, vorhanden sind, müsste das Verfahren abgebrochen werden.

In Schritt S8 wird eine Trajektorie 17 von der Position 14 zur Pose 16 berechnet, wonach das Kraftfahrzeug 1 in Schritt S9 entlang der Trajektorie 17 in die Pose 16 geführt und dort abgestellt wird.

Alternativ wäre es in dem in Fig. 1 dargestelltem Verfahren möglich, statt einer automatischen Längs- und Querführung des Kraftfahrzeugs 1 ein Fahrerassistenzsystem vorzusehen, das einen Fahrer durch Hinweise, beispielsweise durch eine Sprachausgabe, entlang der jeweils bestimmten Trajektorien 13, 17 führt. Das erfindungsgemäße Verfahren kann in diesem Fall von Kraftfahrzeugen genutzt werden, die nicht für eine automatische Längs- beziehungsweise Querführung ausgebildet sind. In einer weiteren alternativen Ausführungsform können beispielsweise ausschließlich Lenkeingriffe automatisch durchgeführt werden und dem Fahrer können Anweisungen gegeben werden, inwieweit er Gas geben, Bremsen und/oder bestimmte Gänge einlegen soll.

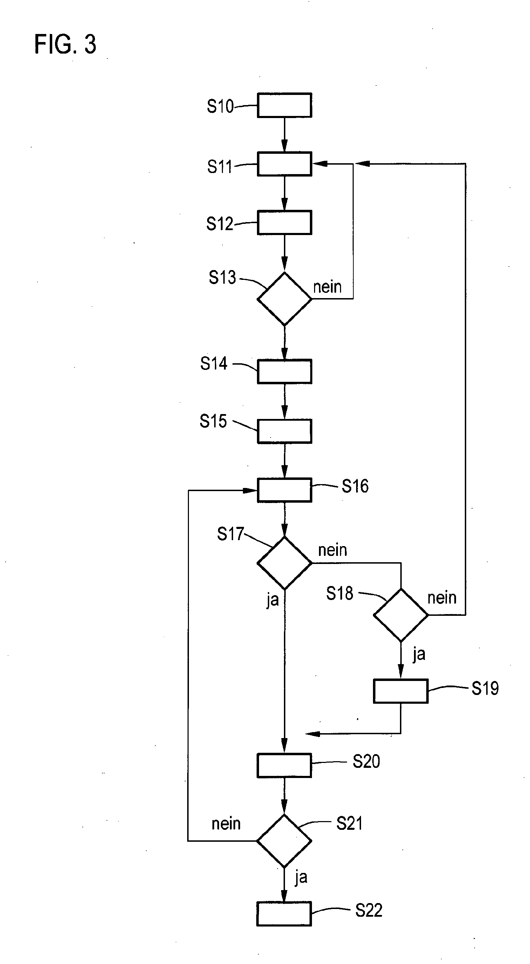

Fig. 3 zeigt ein weiteres Ausführungsbeispiel eines Verfahrens zum Betrieb eines Fahrerassistenzsystems zur Unterstützung eines Parkvorgangs eines Kraftfahrzeugs. Ein wesentlicher Unterschied zum in Fig. 1 dargestellten Verfahren ist einerseits, dass eine fest vorgegebene Karte eines Navigationssystems genutzt wird und keine externe Informationsquelle für Belegungsinformationen vorgesehen ist. Andererseits wird die Trajektorie im Rahmen des Einparkvorgangs kontinuierlich angepasst. Im Rahmen der Erfindung lassen sich offensichtlich Merkmale der verschiedenen Ausführungsbeispiele beliebig kombinieren.

In Schritt S10 wird eine Ist-Fahrzeugposition durch eine Positionsbestimmungseinrichtung des Kraftfahrzeugs erfasst. Anschließend werden in Schritt S11 aus Kartendaten, die in einem Navigationssystem des Kraftfahrzeugs gespeichert sind, mehrere potentiell befahrbare Parkbereiche im Umfeld der Ist-Fahrzeugposition bestimmt.

In Schritt S12 wird durch eine Recheneinrichtung des Kraftfahrzeugs eine Umfelderfassungstrajektorie ermittelt, die eine Erfassung von Umfeldinformationen wenigstens eines der potentiell befahrbaren Parkbereiche durch wenigstens einen Sensor des Kraftfahrzeugs ermöglicht. Die Umfeldinformationen dienen nicht der exakten Vermessung des Parkbereichs, sondern werden vielmehr in Schritt S13 ausschließlich bezüglich einer vorläufigen Information ausgewertet, ob der Parkbereich voraussichtlich tatsächlich befahrbar ist. Beispielsweise können die Umfeldinformationen Bilddaten einer Videokamera sein und ein potentiell befahrbarer Parkbereich kann als nicht befahrbar identifiziert werden, wenn in den Bilddaten ein Kraftfahrzeug im potentiell befahrbaren Parkbereich erkannt wird, da der Parkbereich in diesem Fall belegt ist. Ist der potentiell befahrbare Bereich voraussichtlich nicht tatsächlich befahrbar, so wird das Verfahren mit Schritt S11 fortgesetzt, das heißt das Kraftfahrzeug wird automatisch weiter derart geführt, dass Umfeldinformationen weiterer potentiell befahrbarer Parkbereiche erfasst werden können.

Wird in Schritt S13 für wenigstens einen der potentiell befahrbaren Parkbereiche ermittelt, dass er voraussichtlich tatsächlich befahrbar ist, so wird das Verfahren mit Schritt S14 fortgesetzt, in dem der oder einer der voraussichtlich tatsächlich befahrbaren Parkbereiche als der bestimmte Parkbereich ausgewählt wird.

In Schritt S15 wird eine vorläufige Trajektorie zu dem bestimmten Parkbereich ermittelt, die das Kraftfahrzeug zu der Parkbereichsposition des bestimmten Parkbereichs führt. Wie zu Schritt S3 in Fig. 1 erläutert, erfolgt die Bestimmung der Trajektorie der Art, dass der bestimmte Parkbereich möglichst gut durch Sensoren des Kraftfahrzeugs erfassbar ist.

In Schritt S16 wird das Kraftfahrzeug automatisch entlang der in Schritt S15 bestimmten Trajektorie längs- und quergeführt, wobei, sobald das Umfeld der Parkbereichsposition durch wenigstens einen Sensor des Kraftfahrzeugs erfassbar ist, Sensorinformationen über dieses Umfeld erfasst werden.

In Schritt S17 wird in Abhängigkeit der in Schritt 16 erfassten Sensorinformation ermittelt, ob die Trajektorie, auf der das Kraftfahrzeug geführt wird, voraussichtlich bis zum Abstellen des Kraftfahrzeugs im Parkbereich weiter gefahren werden kann. Ist dies der Fall, wird das Verfahren mit Schritt S20 fortgesetzt, in dem der automatische Fahrbetrieb für einen vorgegebenen Zeitraum fortgesetzt wird. Ist die Trajektorie jedoch aufgrund der Sensorinformation voraussichtlich nicht vollständig fahrbar, so wird das Verfahren mit Schritt S18 fortgesetzt.

In Schritt S18 wird überprüft, ob aus der Parkbereichsinformation und der Sensorinformation hervorgeht, dass das Kraftfahrzeug überhaupt in dem Parkbereich abstellbar ist, beziehungsweise ob der bestimmte Parkbereich tatsächlich befahrbar ist. Dies ist beispielsweise dann nicht der Fall, wenn durch Berücksichtigung von durch die Sensorinformation beschriebenen Hindernissen die Abmessungen des Parkbereichs nicht ausreichend groß sind, um das Kraftfahrzeug im Parkbereich abzustellen. In diesem Fall wird das Verfahren ab Schritt S11 wiederholt, wobei der bisher als bestimmter Parkbereich betrachtete Parkbereich nun als nicht befahrbar gekennzeichnet wird.

Falls voraussichtlich ein Parken in dem bestimmten Parkbereich möglich ist, wird in Schritt S19 die Trajektorie in Abhängigkeit der Parkbereichsinformation und der Sensorinformation angepasst. Anschließend wird in Schritt S20 der Fahrbetrieb für ein vorgegebenes Zeitintervall fortgesetzt.

In Schritt S21 wird anschließend überprüft, ob eine in Abhängigkeit der Parkinformation gewählte und unter Umständen in Abhängigkeit der Sensorinformation angepasste Zielpose innerhalb des Parkbereichs erreicht wurde. Ist dies nicht der Fall, so wir das Verfahren mit Schritt S16 fortgesetzt, in dem erneut eine Sensorinformation ermittelt wird. Ist das Kraftfahrzeug in der Zielpose angelangt, so wird das Kraftfahrzeug abgestellt.

## Patentansprüche

1. Verfahren zum Betrieb eines Fahrerassistenzsystems zur Unterstützung eines Parkvorgangs eines Kraftfahrzeugs, umfassend die Schritte:
- Ermitteln einer Ist-Fahrzeugposition durch eine Positionsbestimmungseinrichtung des Kraftfahrzeugs,
- Ermitteln eines bestimmten Parkbereichs, in dem das Kraftfahrzeug geparkt werden soll, sowie einer zumindest die Parkbereichsposition des bestimmten Parkbereichs beschreibenden Parkbereichsinformation aus vorgegebenen Kartendaten in Abhängigkeit der Ist-Fahrzeugposition durch eine Recheneinrichtung des Kraftfahrzeugs,
- Ermittlung wenigstens einer den bestimmten Parkbereich betreffenden Sensorinformation durch Erfassen des Umfeldes der Parkbereichsposition durch wenigstens einen Sensor des Kraftfahrzeugs, wobei in Abhängigkeit der Parkbereichsinformation der zur Ermittlung der Sensorinformation genutzte Sensor aus einer Mehrzahl von Sensoren des Kraftfahrzeugs ausgewählt wird und/oder wenigstens ein die Erfassung von Sensordaten durch den Sensor parametrisierender Erfassungsparameter und/oder ein die Ermittlung der Sensorinformationen aus den Sensordaten parametrisierender Verarbeitungsparameter angepasst wird,
- Ausgabe einer Fahrerinformation und/oder Durchführen wenigstens eines Fahreingriffs durch das Fahrerassistenzsystem, jeweils in Abhängigkeit sowohl der Parkbereichsinformation als auch der Sensorinformation.

2. Verfahren nach Anspruch 1,
**dadurch gekennzeichnet,**
**dass** das Kraftfahrzeug durch das Fahrerassistenzsystem zumindest teilweise automatisch längs- und/oder quergeführt entlang einer durch die Recheneinrichtung berechneten Trajektorie zu dem bestimmten Parkbereich geführt wird, wobei die Trajektorie in Abhängigkeit sowohl eines Erfassungsbereichs des Sensors als auch der Parkbereichsinformation ermittelt wird.

3. Verfahren nach Anspruch 1 oder 2,
**dadurch gekennzeichnet,**
**dass** durch die Kartendaten mehrere potentiell befahrbare Parkbereiche definiert werden, aus denen der bestimmte Parkbereich ausgewählt wird.

4. Verfahren nach Anspruch 3,
**dadurch gekennzeichnet,**
**dass** vor der Ermittlung des bestimmten Parkbereichs durch den oder wenigstens einen weiteren Sensor des Kraftfahrzeugs zu wenigstens einem der potentiell befahrbaren Parkbereiche Umfeldinformationen erfasst werden, wonach der bestimmte Parkbereich zusätzlich in Abhängigkeit der Umfeldinformationen ausgewählt wird.

5. Verfahren nach Anspruch 4,
**dadurch gekennzeichnet,**
**dass** das Kraftfahrzeug vor der Ermittlung des bestimmten Parkbereichs durch das Fahrerassistenzsystem zumindest teilweise automatisch längs- und/oder quergeführt entlang einer durch die Recheneinrichtung berechneten Umfelderfassungstrajektorie zu wenigstens einer in Abhängigkeit der Kartendaten ermittelten Umfelderfassungsposition geführt wird, wobei an der Umfelderfassungsposition die Umfeldinformationen erfasst werden.

6. Verfahren nach einem der Ansprüche 3 bis 5,
**dadurch gekennzeichnet,**
**dass** die potentiell befahrbaren Parkbereiche durch die Kartendaten als separate Parkbereiche, in denen jeweils genau ein Kraftfahrzeug parkbar ist, definiert werden.

7. Verfahren nach Anspruch 6,
**dadurch gekennzeichnet,**
**dass**, insbesondere durch die Kartendaten, für jeden der potentiell befahrbaren Parkbereiche zusätzlich eine Belegungsinformation vorgegeben wird, durch die angegeben wird, ob der potentiell befahrbare Parkbereich frei oder belegt ist, wobei als der bestimmte Parkbereich einer der als frei markierten potentiell befahrbaren Parkbereiche ausgewählt wird.

8. Verfahren nach Anspruch 7,
**dadurch gekennzeichnet,**
**dass** die Belegungsinformationen vor der Ermittlung eines bestimmten Parkbereichs durch das Fahrerassistenzsystem des Kraftfahrzeugs, insbesondere von einer Infrastruktureinrichtung, drahtlos empfangen werden.

9. Verfahren nach einem der vorangehenden Ansprüche,
**dadurch gekennzeichnet,**
**dass** die Kartendaten vor der Ermittlung eines bestimmten Parkbereichs durch das Fahrerassistenzsystem des Kraftfahrzeugs, insbesondere von einer Infrastruktureinrichtung, drahtlos empfangen werden.

10. Verfahren nach einem der Ansprüche 1 bis 8,
**dadurch gekennzeichnet,**
**dass** die Kartendaten durch ein Navigationssystem des Kraftfahrzeugs bereitgestellt werden.

11. Verfahren nach einem der vorangehenden Ansprüche,
**dadurch gekennzeichnet,**
**dass** als der Sensor oder wenigstens einer der Sensoren ein Ultraschallsensor, ein Laserscanner, eine Kamera oder ein Radarsensor verwendet wird.

12. Kraftfahrzeug,
**dadurch gekennzeichnet,**
**dass** es zur Durchführung des Verfahrens nach einem der vorangehenden Ansprüche ausgebildet ist.

## Claims

1. Method of operating a driver assistance system to support a parking operation of a motor vehicle, comprising the steps of:
- determining an actual vehicle position by a position determining device of the motor vehicle,
- determining a specific parking area in which the motor vehicle is to be parked, and a parking area information describing at least the parking area position of the particular parking area from predetermined map data as a function of the actual vehicle position by a computing device of the motor vehicle,
- determining at least one sensor information relating to the specific parking area by detecting the surroundings of the parking area position by at least one sensor of the motor vehicle, wherein the sensor used to determine the sensor information is selected from a plurality of sensors of the motor vehicle depending on the parking area information and/or at least the detection of sensor data by the sensor parametrising acquisition parameters and/or a parametrising processing parameter is adjusted to the sensor information from the sensor data,
- output of driver information and/or performing at least one driving intervention by the driver assistance system, in each case depending on both the parking area information and the sensor information.

2. Method according to claim 1,
**characterised in that**
the motor vehicle is guided by the driver assistance system at least partially automatically longitudinally and/or transversely along a trajectory to the particular parking area calculated by the computing device, wherein the trajectory is determined depending on both a detection range of the sensor and the parking area information.

3. Method according to claim 1 or 2,
**characterised in that**
a plurality of potentially passable parking areas is defined by the map data, from which the particular parking area is selected.

4. Method according to claim 3,
**characterised in that**
prior to the determination of the particular parking area by the sensor or at least one further sensor of the motor vehicle to at least one of the potentially passable parking areas, surrounding information is detected, according to which the particular parking area is additionally selected in dependence on the surrounding information.

5. Method according to claim 4,
**characterised in that**
the motor vehicle before the determination of the specific parking area by the driver assistance system at least is partially automatically longitudinally and/or transversely guided along a trajectory calculated by the computing surrounding detection to at least one position determined in dependence on the map data surrounding detection, wherein at the surrounding detection position the surrounding information is detected.

6. Method according to one of claims 3 to 5,
**characterised in that**
the potentially passable parking areas are defined by the map data as separate parking areas in each of which exactly one motor vehicle is parked.

7. Method according to claim 6,
**characterised in that**
in particular by the map data, an occupancy information is additionally given for each of the potentially passable parking areas, specified by whether the potentially passable parking area is free or occupied, wherein as the particular parking area one of freely marked potentially accessible parking areas is selected.

8. Method according to claim 7,
**characterised in that**
the occupancy information is received by wireless means before the determination of a specific parking area by the driver assistance system of the motor vehicle, in particular of an infrastructure facility.

9. Method according to one of the preceding claims,
**characterised in that**
the map data are received by wireless means before the determination of a specific parking area by the driver assistance system of the motor vehicle, in particular by an infrastructure device.

10. Method according to one of claims 1 to 8,
**characterised in that**
the map data are provided by a navigation system of the motor vehicle.

11. Method according to one of the preceding claims,
**characterised in that**
as the sensor or at least one of the sensors, an ultrasonic sensor, a laser scanner, a camera or a radar sensor is used.

12. Motor vehicle,
**characterised in that**
it is designed to carry out the method according to one of the preceding claims.

## Revendications

1. Procédé pour le fonctionnement d'un système d'assistance au conducteur pour aider à une opération de stationnement d'un véhicule automobile, comprenant les étapes consistant à :
- rechercher une position réelle du véhicule par un dispositif de détermination de position du véhicule automobile ;
- rechercher une zone de stationnement déterminée dans laquelle le véhicule automobile doit être stationné ainsi qu'une information de zone de stationnement décrivant au moins la position de la zone de stationnement déterminée dans des données en cartes préétablies en fonction de la position réelle du véhicule par un dispositif de calcul du véhicule automobile ;
- rechercher au moins une information de capteur concernant une zone de stationnement déterminée par saisie environnementale de la position de la zone de stationnement par au moins un capteur du véhicule automobile, dans lequel, en fonction de l'information de la zone de stationnement, le capteur utilisé pour rechercher l'information de capteur est choisi parmi une pluralité de capteurs du véhicule automobile et/ou au moins un paramètre de saisie paramétrisant la saisie de données de capteur par le capteur et/ou un paramètre de traitement paramétrisant la recherche des informations de capteur à partir des données de capteur est ou sont ajustés,
- la délivrance d'une information du conducteur et/ou la réalisation au moins d'une intervention de marche par le système d'assistance au conducteur respectivement en fonction autant de l'information de zone de stationnement que de l'information de capteur.

2. Procédé selon la revendication 1,
**caractérisé en ce que**
le véhicule automobile est guidé par le système d'assistance au conducteur au moins en partie automatiquement longitudinalement et/ou transversalement le long d'une trajectoire calculée par le dispositif de calcul vers la zone de stationnement déterminée, dans lequel la trajectoire est recherchée en fonction autant de la zone de saisie du capteur que de l'information de la zone de stationnement.

3. Procédé selon la revendication 1 ou 2,
**caractérisé en ce que**
l'on définit par les données en cartes plusieurs zones de stationnement potentiellement praticables parmi lesquelles on choisit la zone de stationnement déterminée.

4. Procédé selon la revendication 3,
**caractérisé en ce que**,
avant de rechercher la zone de stationnement déterminée par le ou au moins un autre capteur du véhicule automobile, on saisit des informations environnementales dans au moins l'une des zones de stationnement potentiellement praticables, après quoi on choisit la zone de stationnement déterminée également en fonction des informations environnementales.

5. Procédé selon la revendication 4,
**caractérisé en ce que**
le véhicule automobile est guidé avant la recherche de la zone de stationnement déterminée par le système d'assistance au conducteur au moins en partie automatiquement longitudinalement et/ou transversalement le long d'une trajectoire de saisie environnementale calculée par le dispositif de calcul dans au moins une position de saisie environnementale recherchée en fonction des données en cartes, dans lequel les informations environnementales sont saisies dans la position de saisie environnementale.

6. Procédé selon l'une quelconque des revendications 3 à 5,
**caractérisé en ce que**
les zones de stationnement potentiellement praticables sont définies par les données en cartes sous la forme de zones de stationnement séparées dans lesquelles exactement un véhicule automobile peut respectivement être stationné.

7. Procédé selon la revendication 6,
**caractérisé en ce que**,
en particulier au moyen des données en cartes, on affecte en plus pour chacune des zones de stationnement potentiellement praticables une information d'occupation par laquelle on indique si la zone de stationnement potentiellement praticable est libre ou occupée, dans lequel on choisit comme zone de stationnement déterminée l'une des zones de stationnement potentiellement praticables marquées libres.

8. Procédé selon la revendication 7,
**caractérisé en ce que**
les informations d'occupation sont reçues sans fil avant la recherche d'une zone de stationnement déterminée par le système d'assistance au conducteur du véhicule automobile, en particulier depuis un dispositif d'infrastructure.

9. Procédé selon l'une quelconque des revendications précédentes,
**caractérisé en ce que**
les données en cartes sont reçues sans fil avant la recherche d'une zone de stationnement déterminée par le système d'assistance au conducteur du véhicule automobile, en particulier depuis un dispositif d'infrastructure.

10. Procédé selon l'une quelconque des revendications 1 à 8,
**caractérisé en ce que**
les données en cartes sont préparées par un système de navigation du véhicule automobile.

11. Procédé selon l'une quelconque des revendications précédentes,
**caractérisé en ce que**
l'on utilise comme capteur ou au moins l'un des capteurs un capteur ultrasonique, un scanneur à laser, une caméra ou un capteur à radar.

12. Véhicule automobile,
**caractérisé en ce que**
il est conçu pour la réalisation du procédé selon l'une quelconque des revendications précédentes.
